(19) Europäisches Patentamt

European Patent Office

Office européen des brevets

(11) Veröffentlichungsnummer: **0 179 374**
**B1**

(12) **EUROPÄISCHE PATENTSCHRIFT**

(45) Veröffentlichungstag der Patentschrift:
**10.01.90**

(21) Anmeldenummer: **85112952.8**

(22) Anmeldetag: **12.10.85**

(51) Int. Cl.⁴: **B 29 C 35/00** // B29L30:00

(54) **Vulkanisierverfahren für Fahrzeugluftreifen.**

(30) Priorität: **24.10.84 DE 3438911**

(43) Veröffentlichungstag der Anmeldung:
**30.04.86 Patentblatt 86/18**

(45) Bekanntmachung des Hinweises auf die Patenterteilung:
**10.01.90 Patentblatt 90/2**

(84) Benannte Vertragsstaaten:
**AT BE CH DE FR GB IT LI LU NL SE**

(56) Entgegenhaltungen:
**DE-A- 2 228 504**
**DE-A- 3 246 624**
**US-A- 2 913 765**

(73) Patentinhaber: **Continental Aktiengesellschaft,
Königsworther Platz 1, D-3000 Hannover 1 (DE)**

(72) Erfinder: **Rach, Heinz-Dieter, Planetenring 32,
D-3008 Garbsen 1 (DE)**
Erfinder: **Frerichs, Udo, Buchenweg 7,
D-3012 Langenhagen 8 (DE)**
Erfinder: **Klose, Hans-Ulrich, Hauptstrasse 15,
D-3061 Wiedensahl (DE)**
Erfinder: **Boltze, Carsten, Buschweg 7,
D-3015 Wennigsen (DE)**

ACTORUM AG

## Beschreibung

Die Erfindung betrifft ein Vulkanisierverfahren für Fahrzeugluftreifen, deren Reifenwülste in montierter Stellung am radial inneren Umfang einer Felge angeordnet sind sowie eine Vulkanisiereinrichtung dazu.

Diese bekannten Reifen sind mit ihren Wülsten auf Felgensitzflächen befestigt, die am radial inneren Umfang des Felgenkranzes neben sich nach radial innen erstreckenden Felgenhörnern liegen, wie man z.B. der DE-OS-3000428 entnehmen kann. Demzufolge befinden sich die Dichtflächen, die für ein luftdichtes Anliegen der Reifenwülste an der Felge sorgen, im radial und axial äußeren Bereich der Reifenwülste, also im Reifeninnenraum.

Bei konventionellen Vulkanisiervorrichtungen werden die im Außenbereich befindlichen Reifenflächen mittels metallischer Formteile abgeformt, gegen die sie von einem im Innenraum befindlichen Blähbalg gedrückt werden. Mit einem biegsamen Blähbalg ist es jedoch nicht möglich, die beschriebenen Dichtflächen konturgerecht abzuformen.

In der DE-OS-3246624 wird eine Vorrichtung beschrieben, mit der Reifen der eingangs genannten Art vulkanisiert werden können. Dabei ist es jedoch erforderlich, die Reifenseitenwände und die Wülste zum Vulkanisieren nach seitlich außen zu klappen. Ein so vulkanisierter Reifen kann nur unter Verspannungen auf eine Felge montiert werden, worunter die strukturelle Haltbarkeit beim Betrieb leidet.

Der Erfindung liegt deshalb die Aufgabe zugrunde, für Reifen der eingangs genannten Art ein Vulkanisierverfahren anzugeben, mit dem die Reifen so vulkanisiert werden, daß sie anschließend ohne dauerhafte Verspannungen auf eine Felge montiert werden können.

Diese Aufgabe wird erfindungsgemäß dadurch gelöst, daß die Reifen in der Betriebsstellung der Wülste vulkanisiert werden und daß bei der Vulkanisation die radial außen liegenden Flächen der Reifenwülste mit Hilfe von starren, einteiligen Formringen abgeformt werden.

Durch die Vulkanisation in Betriebsstellung werden jegliche schädlichen Verformungen der Reifenkontur gegenüber der späteren Betriebsstellung vermieden.

Glatte, konturgerechte Dichtflächen im radial und axial äußeren Bereich der Reifenwülste werden mit Hilfe von einteiligen Stahlringen mit glatter Oberfläche erzielt. Diese Ringe können mit Hilfe eines üblichen Blähbalgs gegen die Reifeninnenwand gedrückt werden.

Da der Außendurchmesser der Formringe größer ist als der Durchmesser der Kernringe, ist für das Einbringen der Formringe in den Reifenrohling eine ovale Verformung zumindest des einen Reifenwulstes erforderlich. Zum noch besseren Einbringen können die Seitenwände des Reifenrohlings vorübergehend nach seitlich außen geklappt werden.

Aus Gründen der Energieeinsparung ist es günstig, die Formringe unmittelbar vor dem Vulkanisieren in den Reifenrohling einzulegen, nachdem sie einem vorher vulkanisierten Reifen unmittelbar nach der Vulkanisation entnommen worden sind. So kühlen die Formringe zwischen den einzelnen Heizperioden nicht aus.

Alternativ können die Formringe auch bereits beim Wickeln des Reifens an die vorbeschriebenen Stellen gebracht werden, so daß sich eine nachträgliche Verformung des Reifenrohlings erübrigt, die mit einer Beeinträchtigung der Fertigungstoleranzen verbunden sein kann.

Nachfolgend wird ein Ausführungsbeispiel der Erfindung anhand einer Zeichnung beschrieben. Es zeigt:

Fig. 1 einen Reifenrohling mit seitlich nach außen geklappten Reifenwülsten und eingeführten Formringen in einem radialen Teilschnitt;

Fig. 2 eine Vulkanisiervorrichtung (schematisch) mit einem eingelegten Reifenrohling in einem radialen Teilschnitt.

Der Reifenrohling ist in üblicher Weise aufgebaut, so daß er ein Laufband 1, Seitenwände 2 und Reifenwülste 3 mit darin gelagerten Wulstkernen 4 aufweist. Eine nicht gezeichnete Karkasse ist in den Wülsten 3 durch Umschlingen der Wulstkerne 4 verankert, und radial außen von der Karkasse kann sich ein zugfester Gürtel befinden.

Zum leichteren Einbringen von einteiligen Formringen 5, die bevorzugt aus Stahl hergestellt sind, ist es günstig, aber nicht zwingend, die Reifenwülste 3 und die Seitenwände 2 des Reifenrohlings nach seitlich außen zu klappen. Die zweckmäßigerweise von einer Haltevorrichtung 6 gehaltenen Formringe 5 werden im wesentlichen in senkrechter Stellung zum Reifenrohling einzeln oder gemeinsam auf diesen zubewegt und dann unter leichter ovaler Verformung des einen Reifenwulstes 3 in den Innenraum des Reifenrohlings gebracht und dort um ca. 90° gedreht, so daß die Achsen der Formringe 5 und des Reifenrohlings parallel verlaufen. Bei Bedarf können die Formringe 5 auch aus einem anderen wärmeleitenden Material, z.B. aus Aluminium hergestellt sein.

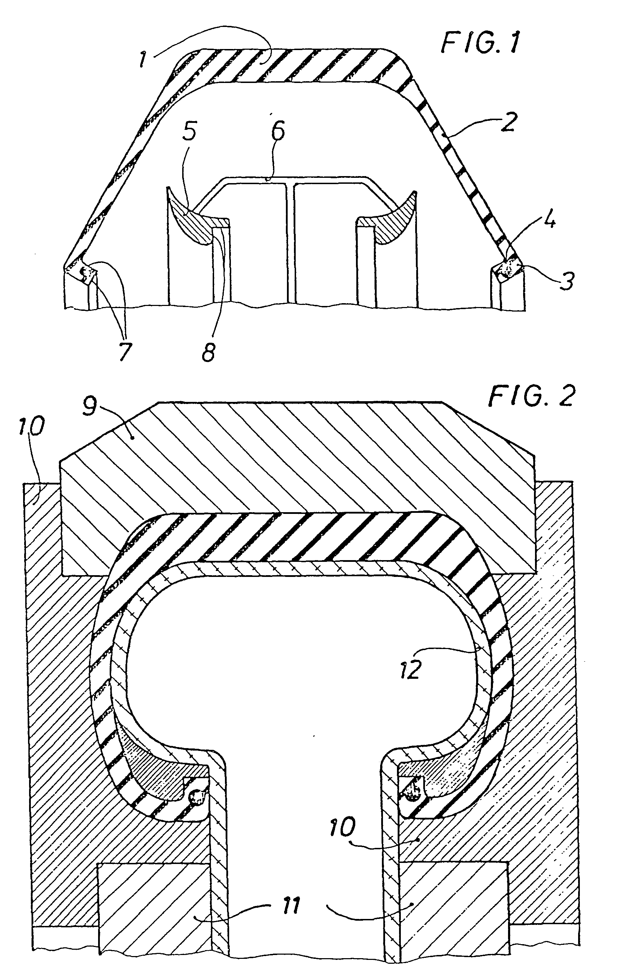

Anschließend werden die Seitenwände 2 und die Reifenwülste 3 des Reifenrohlings wieder nach innen geklappt. Damit die späteren Dichtflächen 7 am Reifenwulst 3 auf die entsprechenden Formflächen 8 der Formringe 5 gelangen (Übergang von Fig. 1 nach Fig. 2), ist es wieder erforderlich, den jeweiligen Reifenwulst 3 leicht oval zu verformen, durch den zugehörigen Formring 5 hindurchzuschieben und dann auf die Formflächen 8 zurückzuziehen. Danach ist die Kontur und Position der Reifenwülste 3 im wesentlichen identisch mit der beim später auf der Felge montierten Reifen, weil die Formringe 5 im Bereich der Formflächen 8 im wesentlichen mit den entsprechenden Teilen der zu verwendenden Felge (Sitzflächen am Felgenkranz und am Felgenhorn) übereinstimmen, so daß der Innendurchmesser der Formringe 5 kleiner oder gleich dem Mittendurchmesser der Kernringe in den Reifenwülsten 3 ist.

Nachdem die Formringe 5 montiert sind, wird der Reifenrohling in eine Vulkanisiervorrichtung eingelegt (Fig. 2), wobei auf ein rechtzeitiges Entfernen der Haltevorrichtung 6 zu achten ist. Die Vulkanisiervorrichtung weist über den Reifenumfang verteilt angeordnete, gewöhnlich radial bewegbare Segmente 9 auf, an die sich axial bewegbare Seitenschalen 10 anschließen. Radial innen befinden sich weitere Formteile 11, an denen ein Blähbalg 12 befestigt ist, der mit einem Heizmedium, z.B. mit Wasserdampf beaufschlagbar ist und der während der Vulkanisation die Formringe 5 gegen die abzuformenden Dichtflächen 7 der Reifeninnenwand drückt.

Nach der Vulkanisation wird der Reifen auf übliche Weise aus der Heizform entfernt. Unmittelbar danach werden die Formringe 5 entnommen und in den nächsten Reifenrohling eingebracht, so daß sie nicht auskühlen.

Bei Bedarf kann das geschilderte Verfahren dahingehend abgeändert werden, daß die Formringe 5 bereits beim Wickeln des Reifens auf der Trommel montiert werden. Dadurch vermeidet man einen separaten Arbeitsgang.

## Patentansprüche

1. Vulkanisierverfahren für Fahrzeugluftreifen, deren Reifenwülste (3) in montierter Stellung am radial inneren Umfang einer Felge angeordnet sind, dadurch gekennzeichnet, daß die Reifen in der Betriebsstellung der Wülste (3) vulkanisiert werden und daß bei der Vulkanisation die radial außen liegenden Flächen der Reifenwülste (3) mit Hilfe von starren, einteiligen Formringen (5) abgeformt werden.

2. Verfahren nach Anspruch 1, dadurch gekennzeichnet, daß Formringe (5) aus Stahl oder einem anderen gut wärmeleitfähigen Material eingesetzt werden.

3. Verfahren nach Anspruch 1, dadurch gekennzeichnet, daß die Formringe (5) unmittelbar vor dem Vulkanisieren in den Reifenrohling eingesetzt werden.

4. Verfahren nach Anspruch 1, dadurch gekennzeichnet, daß die Formringe (5) bereits bei der Reifenkonfektionierung eingesetzt werden.

5. Vulkanisiervorrichtung zur Durchführung des Verfahrens nach Anspruch 1 mit einer Vulkanisierform (Segmente 9, Seitenteile 10) zur Abformung der äußeren Teile des Reifens, dadurch gekennzeichnet, daß zu der Vulkanisiervorrichtung zwei einteilige Formringe (5) gehören, deren Formflächen (8) radial innen in ihrer Kontur und in ihrem Durchmesser im wesentlichen mit den Sitzflächen am Felgenkranz und am Felgenhorn der zu verwendenden Felge übereinstimmen.

## Claims

1. Vulcanising method for pneumatic vehicle tyres, the tyre beads (3) of said tyres being disposed on the radially inner circumference of a rim when they are in their assembled positions, characterised in that the tyres are vulcanised when the beads (3) are in their operational position and in that, during vulcanisation, the radially outer surfaces of the tyre beads (3) are moulded by means of rigid, one-piece moulding rings (5).

2. Method according to claim 1, characterised in that moulding rings (5) are used which are formed from steel or other material having good heat conductivity.

3. Method according to claim 1, characterised in that the moulding rings (5) are inserted into the tyre blank immediately prior to vulcanisation.

4. Method according to claim 1, characterised in that the moulding rings (5) are inserted during actual manufacture of the tyre.

5. Vulcanising device for performing the method according to claim 1, comprising a vulcanising mould (segments 9, lateral portions 10) for moulding the outer parts of the tyre, characterised in that the vulcanising device includes two one-piece moulding rings (5), the moulding surfaces (8) of said rings being radially internally substantially identical, in terms of configuration and diameter, to the seating surfaces on the rim ring and on the rim flange of the rim to be used.

## Revendications

1. Procédé de vulcanisation de pneumatiques de véhicules, dont les talons (3) sont disposés dans la position de montage sur la périphérie radialement intérieure d'une jante, caractérisé en ce que les pneumatiques sont vulcanisés dans la position de service des talons (3) et en ce que, lors de la vulcanisation, les surfaces radialement extérieures des talons (3) du pneumatique sont profilées à l'aide d'anneaux de formage (5) rigides et d'une seule pièce.

2. Procédé selon la revendication 1, caractérisé en ce que les anneaux de formage (5) sont réalisés en acier ou en un autre matériau non-conducteur de la chaleur.

3. Procédé selon la revendication 1, caractérisé en ce que les anneaux de formage (5) sont mis en place dans l'ébauche de pneumatique immédiatement avant la vulcanisation.

4. Procédé selon la revendication 1, caractérisé en ce que les anneaux de formage (65) ont déjà été mis en place lors du confectionnement du pneumatique.

5. Dispositif de vulcanisation pour la mise en œuvre du procédé selon la revendication 1, comportant un moule de vulcanisation (segments 9, parties latérales 10) pour le profilage des parties extérieures du pneumatique, caractérisé en ce que le dispositif de vulcanisation comporte deux anneaux de formage (5) d'une seule pièce, dont les surfaces de formage (8) correspondant, radialement vers l'intérieur, en ce qui concerne leur contour et leur diamètre, dans l'essentiel avec les surfaces d'appui existant sur la couronne et sur le rebord de la jante à utiliser.

*FIG.1*

*FIG. 2*